# FASCICULE DE BREVET EUROPEEN

(11) **EP 1 328 744 B1**
(45) Date de publication et mention de la délivrance du brevet: **22.03.2006**
(21) Numéro de dépôt: 01980613.2
(22) Date de dépôt: 19.10.2001
(51) Int. Cl.: F16K 1/38, B05B 11/00, B05B 1/32, B05B 1/30

(54) **T TE DE DISTRIBUTION ET DISTRIBUTEUR DE PRODUIT FLUIDE COMPORTANT UNE TELLE T TE DE DISTRIBUTION**
AUSGABEKOPF ZUR AUSGABE EINER FLÜSSIGKEIT UND SPENDER MIT EINEM SOLCHEN KOPF
DISPENSING HEAD AND FLUID PRODUCT DISPENSER COMPRISING SAME

(30) Priorité: 23.10.2000 FR 0013570
(43) Date de publication de la demande: 23.07.2003
(73) Titulaire: VALOIS S.A.S., 27110 Le Neubourg (FR)
(72) Inventeur: PETIT, Ludovic, F-27110 Vitot (FR)
(74) Mandataire: CAPRI
(86) Numéro de dépôt international: PCT/FR2001/003256
(87) Numéro de publication internationale: WO 2002/035121

(56) Documents cités:
- US-A- 3 393 873
- US-A- 4 121 619
- US-A- 4 162 763
- US-A- 5 176 296
- US-A- 5 765 752

## Description

La présente invention concerne un dispositif de distribution de produit fluide comportant une tête de distribution, et plus particulièrement une tête de distribution incorporant un obturateur de l'orifice de distribution.

Les obturateurs pour orifice de distribution de distributeur de produit fluide sont bien connus dans l'état de la technique. Il en existe plusieurs types. Une première famille d'obturateurs comprend ceux qui sont sollicités élastiquement vers leur position d'obturation et qui sont déformés ou déplacés par la pression du produit en phase de distribution pour ouvrir l'orifice de distribution. Ces dispositifs peuvent soit comporter des obturateurs en matériau déformable, soit des obturateurs réalisés sous forme de piston coulissant dans le canal d'expulsion un éloignement de l'orifice de distribution sous l'effet de la pression exercée par le produit. Une autre famille d'obturateurs comprend des obturateurs déformés mécaniquement par une partie de la tête de distribution au moment de l'actionnement du dispositif pour distribuer une dose de produit. Dans ce cas, l'ouverture de l'obturateur est indépendante de la pression exercée par le produit.

Le document US 5 176 296 montre un dispositif de distribution de produit fluide selon le préambule de la revendication 1.

Ces obturateurs, bien que fonctionnant de manière correcte, présentent l'inconvénient d'être relativement compliqués à fabriquer et à assembler, et donc coûteux. Généralement, ils nécessitent une modification de la tête de distribution pour permettre l'adaptation de l'obturateur ce qui implique également une élévation du coût de fabrication du dispositif de distribution de produit fluide. D'autre part, lorsque la tête de distribution incorpore un profil de pulvérisation, la présence de l'obturateur altère généralement la géométrie dudit profil de pulvérisation, ce qui est préjudiciable à la qualité du spray lors de l'expulsion du produit.

La présente invention a pour but de fournir une tête de distribution de produit fluide pour distributeur de produit fluide qui ne reproduit pas les inconvénients susmentionnés.

La présente invention a pour but de fournir une tête de distribution qui soit simple à fabriquer et à assembler, et qui ne nécessite pas de modifications de la tête de distribution.

La présente invention a encore pour but de fournir une tête de distribution pour distributeur de produit fluide dans laquelle la géométrie du profil de pulvérisation au niveau de l'orifice de distribution n'est pas modifiée lors de l'expulsion du produit, garantissant une qualité optimale du spray.

La présente invention a aussi pour but de fournir un distributeur de produit fluide comportant une telle tête de distribution.

La présente invention a donc pour objet un dispositif de distribution de produit fluide, comportant une pompe pourvue d'un clapet de sortie et une tête de distribution à actionnement par appui manuel assemblée sur la pompe, ladite tête comportant un corps définissant un canal d'expulsion de produit se terminant par un orifice de distribution, un insert rigide étant disposé dans ledit canal d'expulsion, ledit insert rigide formant le ou étant solidaire du clapet de sortie de ladite pompe, caractérisé en ce que ladite tête de distribution comporte un élément d'obturation disposé dans ledit canal d'expulsion, ledit élément d'obturation étant déplaçable et/ou déformable entre une position d'obturation du canal d'expulsion et une position de non-obturation du canal d'expulsion, ledit insert rigide étant déplaçable dans ledit canal d'expulsion entre une position de repos et une position d'actionnement, ledit élément d'obturation coopérant d'une part avec ledit insert rigide et d'autre part avec ledit corps de telle sorte qu'en position de repos de l'insert, l'élément d'obturation est en position d'obturation et en position d'actionnement de l'insert, l'élément d'obturation est déplacé et/ou déformé vers sa position de non-obturation.

Avantageusement, ledit élément d'obturation est un manchon creux déformable assemblé autour de l'extrémité aval dudit insert rigide dans le sens d'écoulement du produit, une extrémité dudit manchon déformable coopérant avec la paroi frontale dudit canal d'expulsion et l'autre extrémité du manchon déformable coopérant avec un épaulement radial dudit insert.

Avantageusement, ledit manchon déformable est déformé élastiquement dans sa position d'obturation par l'insert rigide qui, dans sa position de repos, exerce une force de compression axiale sur ledit manchon déformable, ledit manchon déformable revenant élastiquement vers sa position de non-obturation lorsque l'insert rigide est déplacé dans sa position d'actionnement, dans laquelle il n'exerce plus de force de compression axiale sur ledit manchon déformable.

Avantageusement, l'extrémité avale dudit insert rigide s'étend au-delà dudit manchon déformable et coopère, de préférence de manière étanche, avec ledit orifice de distribution, en position de repos dudit insert rigide.

Avantageusement, la paroi frontale dudit canal d'expulsion comporte un profil de pulvérisation

Avantageusement, la pompe comporte un piston pour distribuer le produit, ledit insert rigide formant le ou étant solidaire du clapet de sortie de ladite pompe étant déplacé vers sa position d'actionnement en fin de course d'actionnement du piston de la pompe, et étant ramené vers sa position de repos en fin d'expulsion du produit.

D'autres avantages et caractéristiques de l'invention apparaîtront plus clairement au cours de la description détaillée suivante, en référence aux dessins joints, donnés à titre d'exemples non limitatifs, sur lesquels :
- la figure 1 est une vue schématique en section transversale d'une partie de tête de distribution selon un mode de réalisation avantageux de l'invention, en position d'obturation,
- la figure 2 est une vue similaire à celle de la figure 1, en position de distribution, et
- la figure 3 est une vue schématique en section transversale d'un distributeur de produit fluide selon un mode de réalisation avantageux de l'invention.

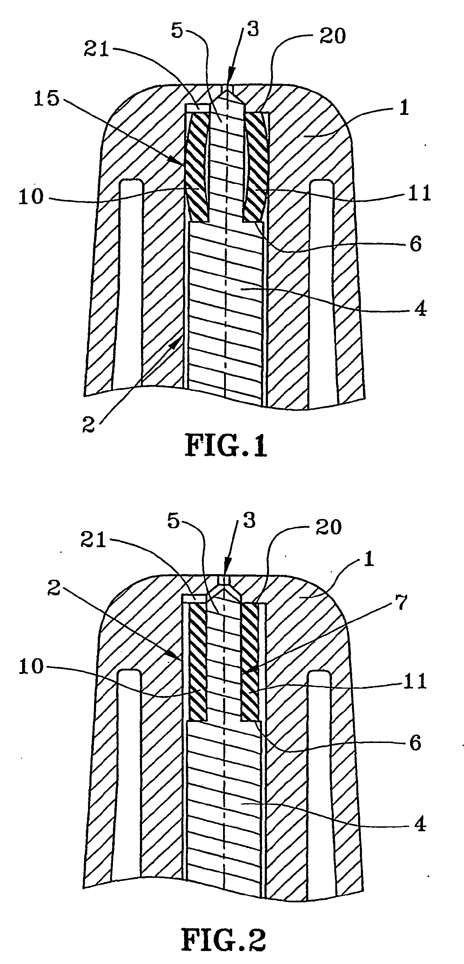

La présente invention conceme une tête de distribution pourvue d'un obturateur. Les figures 1 et 2 représentent la partie d'extrémité d'une tête de distribution nasale, mais la présente invention peut très bien également s'adapter à des têtes de distribution d'un autre type.

En référence aux figures 1 et 2, la tête de distribution comporte un corps 1 définissant un canal d'expulsion 2 qui se termine par un orifice de distribution 3. Un insert rigide 4 est disposé dans ce canal d'expulsion 2 permettant de limiter le volume mort du canal d'expulsion et de définir ainsi un passage étroit pour le produit, favorisant sa pulvérisation au niveau de l'orifice de distribution. Avantageusement, la tête de distribution comporte un profil de pulvérisation 21, de préférence réalisé dans la paroi frontale de fond 20 du canal d'expulsion 2, l'orifice de distribution 3 se trouvant alors au centre dudit profil de pulvérisation 21. De préférence, et de manière connue, le profil de pulvérisation peut comprendre des canaux de tourbillonnement qui se connectent à une chambre de tourbillonnement disposée directement en amont de l'orifice de distribution 3.

Selon l'invention, l'insert rigide 4 est disposé de manière mobile dans le canal d'expulsion 2, entre une position de repos représentée sur la figure 1 et une position d'actionnement représentée sur la figure 2. Un élément d'obturation 10 est en outre disposé dans le canal d'expulsion 2, et coopère d'une part avec le corps 1 de la tête de distribution et d'autre part avec l'insert rigide 4 de telle sorte qu'en position de repos de l'insert rigide 4, l'élément d'obturation 10 obture, de préférence de manière étanche, le canal d'expulsion 2, empêchant ainsi le passage du produit en direction de l'orifice de distribution 3. En position d'actionnement de l'insert rigide 4, l'élément d'obturation 10 est déplacé et/ou déformé vers une position de non-obturation, dans laquelle il libère le passage à l'intérieur du canal d'expulsion 2 pour le produit en direction de l'orifice 3.

En référence aux figures 1 et 2, qui montrent un mode de réalisation avantageux de l'invention, l'élément d'obturation 10 est réalisé sous la forme d'un manchon creux en matériau déformable, par exemple en matériau élastomère, qui est emmanché autour d'une extrémité aval 5 de l'insert rigide 4. L'élément d'obturation 10, c'est à dire le manchon, coopère d'une part avec la paroi frontale 20 du canal d'expulsion 2 et d'autre part avec un épaulement 6 de l'insert rigide 4, qui définit l'extrémité aval 5 dudit insert. Comme représenté sur les figures, en position de repos de l'insert rigide 4, le manchon déformable 10 est de préférence déformé par une force de compression axiale exercée par l'insert rigide 4 sur ledit manchon 10, de telle sorte qu'il s'applique contre la paroi latérale 15 du canal d'expulsion 2 pour y former une étanchéité périphérique, comme représenté sur la figure1. Lorsque l'insert rigide 4 est déplacé vers sa position d'actionnement, au moment de l'expulsion du produit, l'insert n'exerce plus cette force de compression axiale sur le manchon déformable 10, qui revient élastiquement vers sa position non déformée, représentée sur la figure 2, dans laquelle il est plaqué contre la paroi externe 7 de l'extrémité avale 5 de l'insert 4, libérant ainsi le passage dans le canal d'expulsion 2.

Avantageusement, comme décrit précédemment, la paroi frontale 20 du canal d'expulsion 2 peut comporter un profil de pulvérisation 21. Le mode de réalisation représentée sur les figures présente dans ce cas un avantage important, en ce qu'en position d'actionnement, le profil de pulvérisation 21 présente une géométrie non modifiée, puisque dans cette position d'actionnement, l'élément d'obturation 10 formé par le manchon creux est dans sa position non déformée, ledit manchon formant alors la paroi de fond des canaux de pulvérisation. Ceci est très différent des obturateurs existants à ce jour, réalisés en matériau déformable, qui sont généralement déformés élastiquement vers leur position de non-obturation, de sorte que le profil de pulvérisation est nécessairement modifié au moment de l'expulsion, ce qui peut altérer la qualité du spray. Cet inconvénient n'est pas reproduit par la présente invention, comme clairement visible sur les figures.

Avantageusement, comme également représenté sur les figures, l'extrémité aval 5 de l'insert rigide 4 s'étend au-delà du manchon creux 10, et vient coopérer, de préférence de manière étanche, avec l'orifice de distribution 3 en position de repos dudit insert rigide 4. Cette mise en oeuvre, outre le fait qu'elle fournit une double étanchéité, permet d'assurer une obturation au niveau de l'orifice de distribution 3 lui-même, ce que ne procure pas le manchon déformable 10, qui lui exerce son étanchéité d'obturation à l'intérieur du canal d'expulsion 2. On évite ainsi un risque de contamination du produit restant à l'intérieur de la chambre de tourbillonnement ou du profil de pulvérisation après expulsion de la dose.

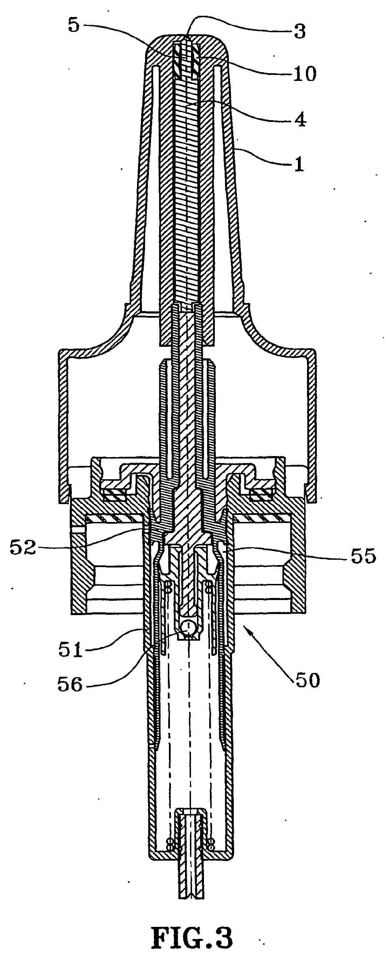

La tête de distribution de la présente invention peut s'appliquer à tous types de dispositifs de distribution de produit fluide. La figure 3 représente un exemple de réalisation avantageux d'un distributeur comportant une tête de distribution telle que décrite ci-dessous. Il comporte un réservoir (non représenté) contenant le produit distribué, sur lequel est monté un organe de distribution, telle qu'une pompe. 50, qui comporte un piston 51, coulissant dans un corps de pompe 52, l'actionnement dudit piston 51 permettant de distribuer sélectivement le produit contenu dans le réservoir. Une chambre de pompe 55 est définie entre un clapet d'entrée 56, qui relie la chambre de pompe 55 au réservoir, et un clapet de sortie qui relie la chambre de pompe 55 au canal de d'expulsion 2 de ladite tête de distribution. Avantageusement, l'insert rigide 4 est solidaire dudit clapet de sortie, de sorte qu'il est déplacé de sa position de repos vers sa position d'actionnement au moment où le clapet de sortie est ouvert, permettant l'expulsion du produit de ladite chambre de pompe 55. En particulier, ledit insert rigide 4 forme lui-même le clapet de sortie de la pompe 50, et ledit insert rigide 4 est déplacé de sa position de repos vers sa position d'actionnement en fin de course d'actionnement du piston 51 de la pompe, garantissant une ouverture du canal d'expulsion 2 et de l'orifice de distribution 3 au moment précis où le produit contenu dans la chambre de pompe 55 est expulsé. En fin d'expulsion de produit, le clapet de sortie est refermé, ramenant l'insert 4 dans sa position de repos, ce qui déforme l'obturateur 10 vers sa position d'obturation (cf. figure 1). L'obturateur est donc ouvert et fermé mécaniquement par l'ouverture et la fermeture du clapet de sortie de la pompe 50.

La présente invention a été décrite en référence à un mode de réalisation avantageux de celle-ci, mais il est entendu que diverses modifications peuvent y être apportées sans sortir du cadre de la présente invention telle que définie par les revendications annexées.

## Revendications

1. Dispositif de distribution de produit fluide, comportant une pompe (50) pourvue d'un clapet de sortie et une tête de distribution à actionnement par appui manuel assemblée sur la pompe, ladite tête comportant un corps (1) définissant un canal d'expulsion de produit (2) se terminant par un orifice de distribution (3), un insert rigide (4) étant disposé dans ledit canal d'expulsion (2), ledit insert rigide formant le ou étant solidaire du clapet de sortie de ladite pompe, **caractérisé en ce que** ladite tête de distribution comporte un élément d'obturation (10) disposé dans ledit canal d'expulsion (2), ledit élément d'obturation (10) étant déplaçable et/ou déformable entre une position d'obturation du canal d'expulsion (2) et une position de non-obturation du canal d'expulsion (2), ledit insert rigide (4) étant déplaçable dans ledit canal d'expulsion (2) entre une position de repos et une position d'actionnement, ledit élément d'obturation (10) coopérant d'une part avec ledit insert rigide (4) et d'autre part avec ledit corps (1) de telle sorte qu'en position de repos de l'insert (4), l'élément d'obturation (10) est en position d'obturation et en position d'actionnement de l'insert (4), l'élément d'obturation (10) est déplacé et/ou déformé vers sa position de non-obturation.

2. Dispositif selon la revendication 1, dans lequel ledit élément d'obturation est un manchon creux déformable (10) assemblé autour de l'extrémité aval (5) dudit insert rigide (4) dans le sens d'écoulement du produit, une extrémité (11) dudit manchon déformable (10) coopérant avec la paroi frontale (20) dudit canal d'expulsion (2) et l'autre extrémité (12) du manchon déformable (10) coopérant avec un épaulement radial (6) dudit insert (4).

3. Dispositif selon la revendication 2, dans lequel ledit manchon déformable (10) est déformé élastiquement dans sa position d'obturation par l'insert rigide (4) qui, dans sa position de repos, exerce une force de compression axiale sur ledit manchon déformable (10), ledit manchon déformable (10) revenant élastiquement vers sa position de non-obturation lorsque l'insert rigide (4) est déplacé dans sa position d'actionnement, dans laquelle il n'exerce plus de force de compression axiale sur ledit manchon déformable (10).

4. Dispositif selon la revendication 2 ou 3, dans lequel l'extrémité avale (5) dudit insert rigide (4) s'étend au-delà dudit manchon déformable (10) et coopère, de préférence de manière étanche, avec ledit orifice de distribution (3), en position de repos dudit insert rigide (4).

5. Dispositif selon l'une quelconque des revendications précédentes, dans lequel la paroi frontale (20) dudit canal d'expulsion (2) comporte un profil de pulvérisation (21),

6. Dispositif selon l'une quelconque des revendications précédentes, dans lequel la pompe (50) comporte un piston (51) pour distribuer le produit, ledit insert rigide (4) formant le ou étant solidaire du clapet de sortie de ladite pompe (50), étant déplacé vers sa position d'actionnement en fin de course d'abonnement du piston (51) de la pompe (50), et étant ramené vers sa position de repos en fin d'expulsion du produit

## Patentansprüche

1. Aizsgabevorrichtung zur Ausgabe einer Flüssigkeit, aufweisend eine Pumpe (50), die mit einem Auslassventil versehen ist, und einen auf der Pumpe angebrachten Ausgabekopf, der durch manuellen Druck zu betätigen ist, wobei der Kopf einen Körper (1) aufweist, der einen Produktausgabekanal (2) begrenzt, der in einer Ausgabeöffnung (4) endet, wobei ein starrer Einsatz (4) in dem Ausgabekanal (2) angeordnet ist, wobei der starre Einsatz das Auslassventil der Pumpe bildet oder einstückig mit diesem ausgebildet ist, **dadurch gekennzeichnet, dass** der Ausgabekopf ein Verschlusselement (10) aufweist, das in dem Ausgabekanal (2) angeordnet ist, wobei sich das Verschlusselement (10) zwischen einer den Ausgabekanal (2) verschließenden und einer den Ausgabekanal (2) nicht verschließenden Position bewegt oder verformt werden kann, wobei der starre Einsatz (4) innerhalb des Ausgabekanals (2) zwischen einer Ruheposition und einer Betätigungsposition beweglich ist, wobei das Verschlusselement (10) einerseits mit dem starren Einsatz (4) und andererseits mit dem Körper (1) derart zusammenwirkt, dass sich in der Ruheposition des Einsatzes (4) das Verschlusselement (10) in der Verschlussposition befindet, und in der Betätigungsposition des Einsatzes (4) das Verschlusselement (10) in seine nicht verschließende Position bewegt und/oder verformt wird.

2. Vorrichtung nach Anspruch 1, wobei das Verschlusselement eine verformbare hohle Hülse (10) ist, die um das stromabwärtige Ende (5) des starren Einsatzes (4) in der Fließrichtung der Flüssigkeit angebracht ist, wobei ein Ende (11) der verformbaren Hülse (10) mit der Stirnwand (20) des Ausgabekanals (2) zusammenwirkt und das andere Ende (12) der verformbaren Hülse (10) mit einem radialen Vorsprung (6) des Einsatzes (4) zusammenwirkt.

3. Vorrichtung nach Anspruch 2, wobei die verformbare Hülse (10) durch den starren Einsatz (4) elastisch in ihre Verschlussposition verformt wird, welcher Einsatz in seiner Ruheposition eine axiale Druckkraft auf die verformbare Hülse (10) ausübt, wobei die verformbare Hülse (10) elastisch in ihre nicht verschließende Position zurückkehrt, wenn der starre Einsatz (4) in seine Betätigungsposition bewegt wird, in welcher er keine axiale Druckkraft mehr auf die verformbare Hülse (10) ausübt.

4. Vorrichtung nach Anspruch 2 oder 3, wobei sich das stromabwärtige Ende (5) des starren Einsatzes (4) jenseits der verformbaren Hülse (10) erstreckt und in der Ruheposition des starren Einsatzes (4) mit der Ausgabeöffnung (3) vorzugsweise dichtend zusammenwirkt.

5. Vorrichtung nach einem der vorhergehenden Ansprüche, wobei die Stirnwand (20) des Ausgabekanals (2) ein Sprühprofil (21) aufweist.

6. Vorrichtung nach einem der vorhergehenden Ansprüche, wobei die Pumpe (50) einen Kolben (51) zum Ausgeben des Produktes aufweist, wobei der starre Einsatz (4), der das Auslassyentil der Pumpe (50) bildet oder mit dieser einstückig ausgebildet ist, am Ende des Betätigungshubs des Kolbens (51) der Pumpe (50) in seine Betätigungsposition bewegt wird und am Ende der Ausgabe des Produktes in seine Ruheposition zurückgebracht wird.

## Claims

1. A fluid dispenser device comprising a pump (50) provided with an outlet valve and a dispensing head mounted on said pump and being manually actuated, said head comprising a body (1) defining a fluid discharge channel (2) ending in a dispensing orifice (3), a rigid insert (4) being disposed in said discharge channel (2), said rigid insert forming or being secured to the outlet valve of said pump, said fluid dispenser device being **characterized in that** said dispensing head further comprises a closure element (10) disposed in said discharge channel (2), said closure element (10) being mounted to move and/or to deform between a closure position in which it closes off the discharge channel (2) and a non-closure position in which it does not close off the discharge channel (2), said rigid insert (4) being mounted to move inside said discharge channel (2) between a rest position and an actuating position, said closure element (10) co-operating at one end with said rigid insert (4) and at the other end with said body (1) so that, when the insert (4) is in the rest position, the closure element (10) is in the closure position, and when the insert (4) is in the actuating position, the closure element (10) is moved and/or deformed into its non-closure position.

2. A device according to claim 1, in which said closure element is a deformable hollow sleeve (10) assembled around the downstream end (5) of said rigid insert (4) in the direction in which the fluid flows, one end (11) of said deformable sleeve (10) co-operating with the end-wall (20) of said discharge channel (2), and the other end (12) of the deformable sleeve (10) co-operating with a radial shoulder (6) of said insert (4).

3. A device according to claim 2, in which said deformable sleeve (10) is elastically deformed into its closure position by the rigid insert (4) which, in its rest position, exerts an axial compression force on said deformable sleeve (10), said deformable sleeve (10) returning elastically to its non-closure position when the rigid insert (4) is moved into its actuating position, in which it no longer exerts any axial compression force on said deformable sleeve (10).

4. A device according to claim 2 or claim 3, in which the downstream end (5) of said rigid insert (4) extends beyond said deformable sleeve (10) and co-operates, preferably in leaktight manner, with said dispensing orifice (3), when said rigid insert (4) is in the rest position.

5. A device according to any preceding claim, in which the end-wall (20) of said discharge channel (2) has a spray profile (21).

6. A device according to any preceding claim, in which the pump (50) has a piston (51) for dispensing the fluid, said rigid insert (4) forming or being secured to the outlet valve of said pump (50), being moved into its actuating position at the end of the actuating stroke of the piston (51) of the pump (50), and being returned to its rest position at the end of discharge of the fluid.
